# EUROPEAN PATENT APPLICATION

(11) **EP 0 528 603 A1**
(43) Date of publication of application: **24.02.1993**
(21) Application number: 92307239.1
(22) Date of filing: 07.08.1992
(51) Int. Cl.: G02F 1/1339

(54) **Method for manufacturing liquid crystal display apparatus**

(30) Priority: 16.08.1991 JP 229786/91
(71) Applicant: International Business Machines Corporation, Armonk, N.Y. 10504 (US)
(72) Inventor: Suzuki, Shunji, Yokohama-shi, Kanagawa-ken (JP); Tajima, Kenichi, Setagaya-ku, Tokyo-to (JP); Uchida, Hironaga, Asahiruumiitsukubatokodai, Tsukuba-shi, Ibaragi-ken (JP)
(74) Representative: Killgren, Neil Arthur

(57) **Abstract**

A method for manufacturing a liquid crystal display apparatus is described in which the thickness of the liquid crystal layer is controlled by means of the spacers 8 and is characterised in that when the glass substrates 2 and 4 are sealed, the spacers 8 are distributed not only to the inner part, but also to the outer part of the circumferential seal portion. In a sealing process for the glass substrates, uniform forces are applied throughout the glass substrates, thereby strains are reduced at the circumferential part of the effective display area, and the thickness of the liquid crystal layer is made more even at the circumferential part of the effective display area.

## Description

The present invention relates to a method for manufacturing a liquid crystal display apparatus and more specifically to a method of controlling the thickness of a liquid crystal layer during the manufacturing process.

The thickness of a liquid crystal layer in a liquid crystal display apparatus is one of principal parameters for determining apparatus characteristics such as response, contrast, viewing angles, etc. Therefore, the control of the thickness of the liquid crystal layer has become an important subject in this technical field.

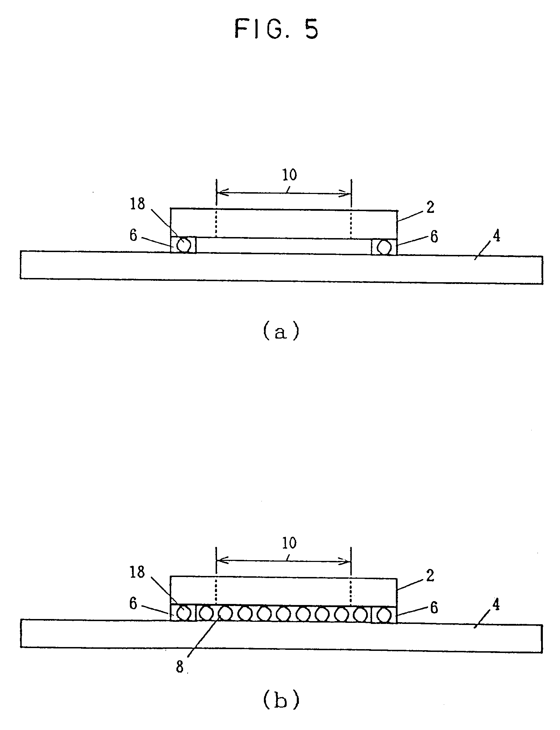

In the following, a monochrome liquid crystal display apparatus is described as an example. In a relatively small liquid crystal display apparatus, as shown in FIG.5(a), cylindrical or spherical spacers 18 of a predetermined diameter are mixed in a circumferential seal member 6, with the size of the spacers 18 determining the thickness of a liquid crystal layer. In order to simplify this explanation, a wiring :structure such as TFTs (Thin Film Transistors) and a black matrix layer, which define an effective display area 10, that is, an actual display screen are omitted from the figure.

As the area of the display frame increases, it becomes difficult to obtain even thickness throughout a display area using the above described method. Therefore, as shown in FIG.5(b), in addition to the spacers 18 mixed into the circumferential seal member 6, cylindrical or spherical spacers 8 of a predetermined diameter are scattered throughout the inner part of the circumferential seal member to obtain even thickness throughout the display area.

However, as shown in FIG.5(b), even if the spacers are scattered throughout the inner part of the circumferential seal member 6, the evenness in the thickness of the liquid crystal layer is not sufficient for higher quality displays. The unevenness in the thickness of the liquid crystal at the central and the circumferential areas on the screen causes a deterioration in contrast.

Particularly, in a color liquid crystal display apparatus, due to the lack of the evenness in the thickness of the liquid crystal layer at the circumferential part of the effective display area, not only contrast will worsen, but also colors will have inhomogenous regions like picture frames at the circumferential part of the effective display area. As disclosed by e.g. Patent Application 62-210425, if the circumferential part of a color filter layer extends to the circumferential seal portion, it is possible to considerably overcome the problem of unevenness in the thickness of the liquid crystal layer in the circumferential part of the effective display area. However, if higher display quality is required, it is desirable to improve the evenness in the thickness of the liquid crystal layer.

An object of the present invention is to make the thickness of the liquid crystal layer uniform at the circumferential part of the effective display area to obtain an even display quality on the screen.

Accordingly, the invention provides a method of manufacturing a liquid crystal display apparatus in which the thickness of the liquid crystal layer disposed between two parallel transparent plates is defined by means of spacers and the extent of the liquid crystal layer is defined by a seal member in between the plates; the method comprising:
providing spacer elements between the plates both inside and outside the seal member.

A method for manufacturing a liquid crystal display apparatus according to the present invention, in which the thickness of a liquid crystal layer is controlled by spacers is characterized in that when glass substrates are sealed, the spacers are distributed not only to the inner part, but also to the outer part of a circumferential seal portion.

In a preferred method of manufacture, a dummy layer is provided to the outer part of the circumferential seal portion of the glass substrates to be sealed, the dummy layer having the same thickness as that of a layer provided to an effective display area of said glass substrates, said glass substrates being sealed, with the spacers of the same diameter scattered in both the inner and the outer parts of the circumferential seal portion of said glass substrates.

According to the present invention, spacers, which were used only in the inner part of a circumferential seal portion in the prior art, are provided also to the outer part of the circumferential seal portion. Therefore, uniform forces are applied throughout the glass substrates in a sealing process for the glass substrates, thereby reducing the strains at the circumferential part of the effective display area, that is, the thickness of the liquid crystal layer becomes more uniform at the circumferential part of the effective display area. In other words, the present invention uses the spacers also in the outer part of the circumferential seal portion so that strains become reduced in the circumferential part of the effective display area.

Embodiments of the invention will now be described, by way of example only, with reference to the accompanying drawings in which:
FIG. 1 shows an embodiment of the present invention applied to a monochrome liquid crystal display apparatus;
FIG. 2 shows an embodiment of the present invention including a cutting process for glass substrates;
FIG. 3 shows an embodiment of the present invention applied to a colour liquid crystal display apparatus;
FIG. 4 shows an alternative embodiment of the present invention applied to a colour liquid crystal display apparatus;
FIG. 5 shows a conventional manufacturing method for a liquid crystal display apparatus in which the thickness of a liquid crystal layer is controlled.

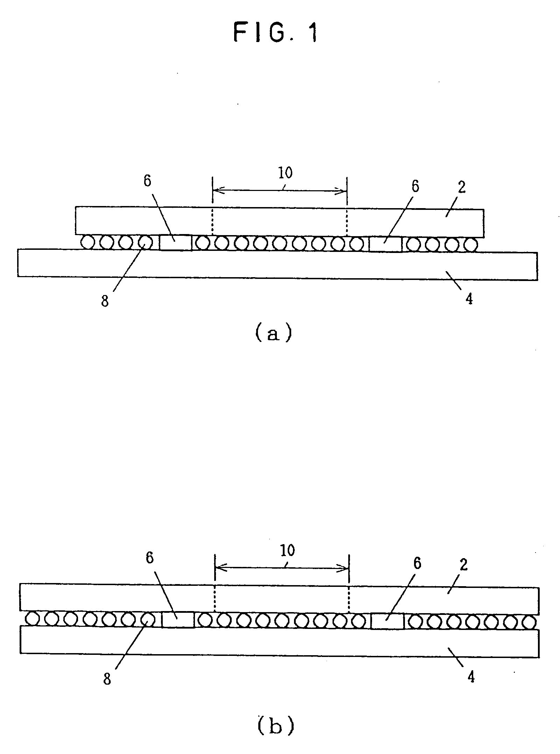

An embodiment of the present invention as employed in a monochrome liquid crystal display apparatus is described with reference to FIG.1(a). FIG.1(a) shows a sealing process for glass substrates, which is one step in the process used to manufacture the monochrome liquid crystal display apparatus. As shown in FIG.1(a), opposite glass substrates 2 and 4 are bonded to each other by means of a circumferential seal member 6. Heating and pressuring processes are then employed to solidify the circumferential member, thereby sealing the glass substrates. Other elements of the apparatus such as conductors, a black matrix layer, etc., are omitted from the figure to simplify the explanation. According to the present invention, spacers 8 of the same diameter are distributed not only in the space defined within the seal portion, but also outside the circumferential seal portion. Therefore, in the heating and the pressuring processes for the glass substrate, uniform forces are applied throughout the glass substrates and strains are reduced in the circumferential part of the effective display area 10 to give a uniform thickness of a liquid crystal layer extending out to the circumferential part of the effective display area 10. To reduce the strains produced in the circumferential part of the effective display area 10, it is desirable that the sizes of the glass substrates are significantly larger, as shown in FIG.1(a), than that of the circumferential seal portion.

Now, as shown in FIG.1(b), if two glass substrates are of the same size (the size of one glass substrate is the same as that of the other glass substrate in length and width), then the forces applied to the glass substrates will be uniform during the heating and pressuring processes and therefore the strains produced will be reduced in the circumferential part of the effective display area 10. The thickness of the liquid crystal layer will therefore become more even than in FIG.1(a), in the circumferential part of the effective display area 10.

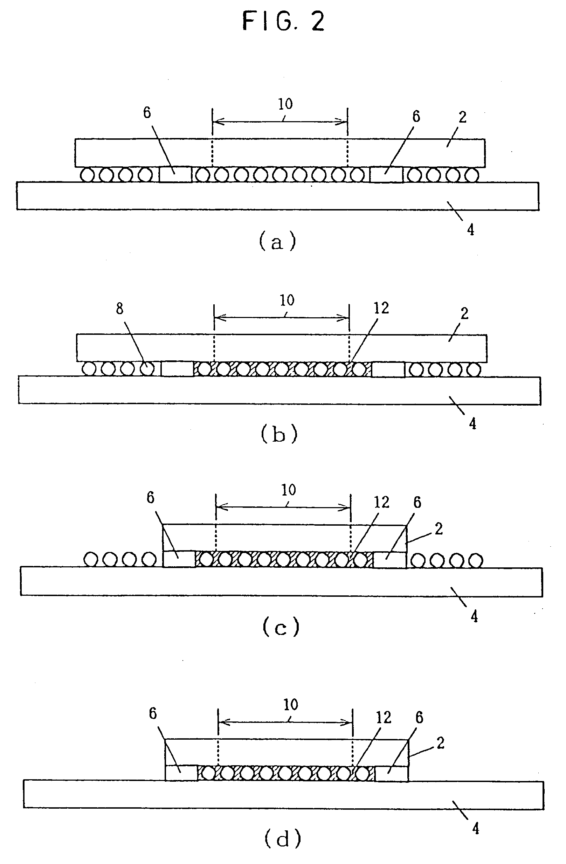

FIG.2 shows an embodiment of a manufacturing method according to the present invention, including a cutting process (c). As shown in FIG.2(a), first, the opposite glass substrates are sealed through the circumferential seal member 6, and then, as shown in FIG.2(b), a liquid crystal 12 is injected via an injection hole and then the hole is sealed. Then, if necessary, as shown in FIG.2(c), one of the glass substrates is cut to the desired size. Particularly, as shown in FIG.1(b), in the case where the glass substrates of the same size are used, the cutting process would become necessary for wiring leads from conductors formed on the lower substrate to external IC drivers. FIG.2(d) shows a cleaning process for removing the remains of spacers in the outer part of the circumferential seal portion. The cleaning process is needed regardless of the cutting process shown in FIG.2(c).

In the following, an embodiment of the present invention employed in the manufacture of a color liquid crystal display apparatus is described.

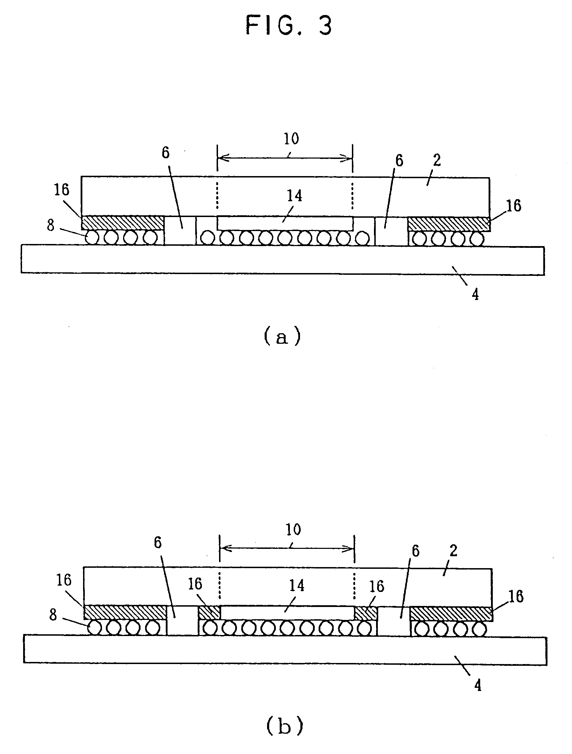

As in the case of the monochrome apparatus, the process of manufacturing a color liquid crystal display apparatus employs spacers in both the inner and the outer parts of the circumferential seal portion. However, in the case of the color liquid crystal display apparatus, a gap corresponding to the thickness of a color filter layer 14 is formed. To fill the gap, as shown in FIG.3(a), it is preferable that a dummy layer 16 of the same thickness as that of the color filter layer 14 is formed on one of the glass substrates in the outer part of the circumferential seal portion.

To make the thickness of the liquid crystal layer even in the circumferential part of the effective display area 10, the spacers are used in both the inner and the outer parts of the circumferential seal portion and the dummy layer 16 of the same thickness as that of the color filter layer 14 is formed on one of the glass substrates in the outer part of the circumferential seal portion. However, to obtain more ideal evenness, as shown in FIG.3(b), it is preferable that a dummy layer 16 of the same thickness as that of the color filter layer 14 is formed outside the effective display area 10 but within the space defined inside the circumferential seal portion.

It is prefered that the dummy layers 16 are made of the same material as the color filter layer 14. If both are made of the same material, forces are applied more uniformly to the glass substrates in the heating and pressuring processes for the glass substrates. In more preferable mode, the dummy layers 16 take the place of the color filter layer. Thereby, the dummy layers can be formed simultaneously in a process for forming the color filter layer. This has an advantage of cost reduction in the manufacturing process.

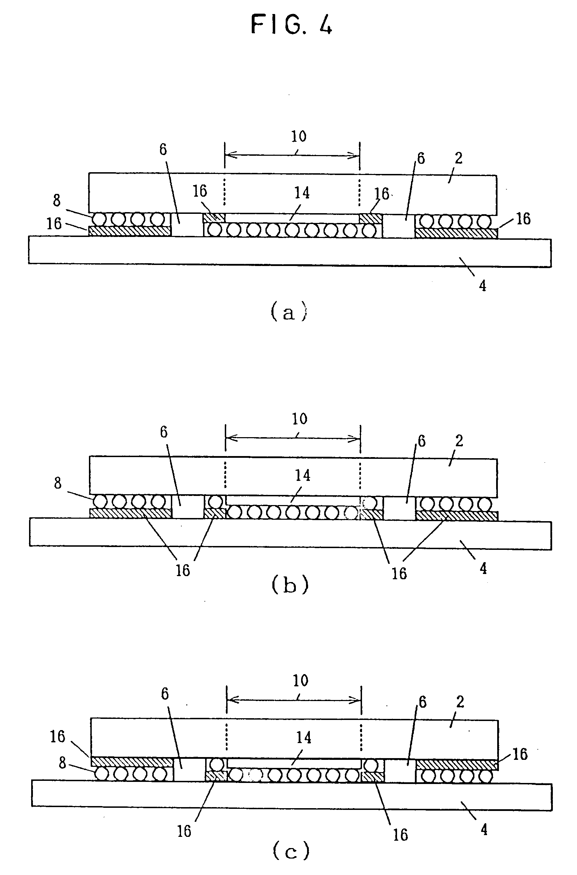

Incidentally, the dummy layers are formed only for the purpose of filling a gap corresponding to the thickness of the color filter layer 14. Therefore, as shown in FIG.4(a), (b), and (c), it will be recognized that the dummy layers 16 may be formed on glass substrate 4. The process for cutting one of the glass substrates to a desired size and removing unnecessary spacers is the same as in the monochrome liquid crystal display apparatus.

For the monochrome liquid crystal display apparatus, since such a layer as the color filter layer 14 by which a large gap is made does not exist, the need to form the dummy layers 16 is not so great. That is, for the monochrome liquid crystal display apparatus, since the thickness of a wiring structure and a black matrix layer are not so large, a gap between a portion in which the wiring, etc. exists and a portion in which the wiring, etc. does not exist is not significant. However, if necessary, in the same manner as in the case of the color liquid crystal display apparatus, a dummy layer of the same thickness as that of a layer by which a slight gap is made, may be formed in the outer part of the circumferential seal portion on the glass substrate or in both the inner and the outer parts of the circumferential portion on the outside of the effective display area in the glass substrate. The dummy layer is made of the same material as the layer which makes the gap, the same as in the color liquid crystal apparatus (in more preferable mode, it may form the same layer as the layer which makes the gap).

It will be appreciated that in both the monochrome and color liquid crystal display apparatus, spacers may be inserted into the circumferential seal member 6 used for sealing the glass substrates. In this case, since such a layer as the color filter layer which makes a gap does not exist in the circumferential seal portion, a diameter of the spacers inserted in the circumferential seal portion must be greater than that of the spacers used in the inner or the outer part of the circumferential seal portion.

## Claims

1. A method of manufacturing a liquid crystal display apparatus in which the thickness of the liquid crystal layer disposed between two parallel transparent plates is defined by means of spacers and the extent of the liquid crystal layer is defined by a seal member in between the plates; the method comprising:
providing spacer elements between the plates both inside and outside the seal member.

2. A method as claimed in claim 1, further comprising:
providing a dummy layer on the inner surface of one of the transparent plates in a region outside the seal member, the dummy layer having the same thickness as that of a layer provided to an effective display area of the transparent plates.

3. A method as claimed in claim 2, further comprising:
providing a second dummy layer on one of the plates in the region inside the seal member but outside the effective display area of the transparent plates, the thickness of the second dummy layer being equal to both the thickness of the dummy layer outside the seal member and the thickness of the layer applied to the effective display area of the plates.

4. A method as claimed in claim 2 or claim 3, wherein the effective display area layer is a colour filter layer applied to one of the transparent plates.

5. A method of manufacturing a liquid crystal display apparatus as claimed in claim 2 or claim 3, wherein a colour filter layer for an effective display area is provided on one of said transparent plates and a dummy layer for other than the effective display area is provided on the other of said transparent plates.

6. A method of manufacturing a liquid crystal display apparatus as claimed in any of claims 2 to 5, wherein spacers are provided in the circumferential seal member, the seal member spacers having a greater diameter than the spacers disposed between the dummy layer and opposing transparent plate.

7. A method of manufacturing a liquid crystal display apparatus according to any of claims 1 to 6, wherein the two transparent plates have the same size.

8. A method of manufacturing a liquid crystal display apparatus according to claim 7, wherein after the transparent plates are sealed at least one of the plates is cut to a desired size.

9. A method of manufacturing a liquid crystal display apparatus according to any of claims 1 to 8, wherein the material of said dummy layer is the same as that of a layer provided to an effective display area.

10. A method of manufacturing a liquid crystal display apparatus according to any of claims 1 to 8, wherein said dummy layer is a colour filter layer.
